# FASCICULE DE BREVET EUROPEEN

(11) **EP 3 134 770 B1**
(45) Date de publication et mention de la délivrance du brevet: **06.03.2019**
(21) Numéro de dépôt: 15721151.7
(22) Date de dépôt: 24.04.2015
(51) Int. Cl.: G03B 21/26, G03B 15/12, G03B 21/60

(54) **DISPOSITIF D'AFFICHAGE AVEC SIMULATION DES REFLETS ET OU SCINTILLEMENTS**
ANZEIGEVORRICHTUNG MIT SIMULATION VON REFLEXE UND ODER FLIMMERN
DISPLAY WITH SIMULATIONS OF REFLECTIONS AND OR GLITTERS

(30) Priorité: 25.04.2014 FR 1453749
(43) Date de publication de la demande: 01.03.2017
(73) Titulaire: IMMERSION, 33100 Bordeaux (FR)
(72) Inventeur: CHARTIER, Christophe, F-33000 Bordeaux (FR)
(74) Mandataire: Ipside
(86) Numéro de dépôt international: PCT/EP2015/058872
(87) Numéro de publication internationale: WO 2015/162235

(56) Documents cités:
- WO-A1-2012/172044
- US-A- 5 210 624
- US-A- 5 808 589
- Jason Leigh ET AL: "ImmersaDesk-4 : A High Resolution, High Visual Acuity Desktop Virtual Reality System", Electronic Visualization Laboratory, 11 novembre 2005 (2005-11-11), XP055019318, Extrait de l'Internet: URL:http://www.evl.uic.edu/cavern/rg/20050 415_leigh/ID4.7.pdf [extrait le 2012-02-14]

## Description

### DOMAINE DE L'INVENTION

La présente invention appartient au domaine de la réalité virtuelle et de la représentation virtuelle d'objets.

Plus particulièrement l'invention concerne un dispositif d'affichage d'un objet virtuel comportant une représentation virtuelle des scintillements de l'objet tels qu'ils peuvent résulter de reflets lumineux à la surface de l'objet ou des phénomènes de diffraction ou de réfraction de rayons lumineux dans l'objet.

### ETAT DE L'ART

Il est connu aujourd'hui de réaliser par des moyens de calculs numériques des images de synthèse aptes à être affichées sur des écrans et imprimées.

Les logiciels actuels restituent avec beaucoup de détails et de réalisme les objets en images de synthèse par l'utilisation de la couleur, de textures, d'ombrages, de transparences et reflets.

Toutefois le réalisme obtenu reste sensiblement celui d'une photographie qui sur le papier restitue une image mate et sur un écran une image lumineuse, plus ou moins contrastée suivant les qualités de l'écran qui peut être un écran diffusant la lumière lorsque la projection est réalisée sur une face arrière de l'écran et un écran possédant des propriétés de réflexion diffuse pour obtenir des angles de vision optimaux lorsque l'image est projetée sur une face avant de l'écran.

A ce jour les images, photographiques ou de synthèse, affichées sur les écrans ne sont pas en mesure de restituer le scintillement, c'est à dire le reflet instable, que l'on observe sur un objet lorsqu'un rayon lumineux est réfléchi sur certaines facettes d'un objet ou lorsqu'il est diffracté par la matière de l'objet et que des interactions physiques agissent sur le stabilité des trajets des rayons lumineux ou de leurs perceptions comme lorsque le point d'observation, la position de la source lumineuse ou la position de l'objet est modifié.

Aucun des systèmes connus d'affichage d'images, sauf dans une certaine mesure mais dans des conditions proches du laboratoire pour des conditions prédéterminées des systèmes holographiques, ne reproduit de manière satisfaisante la dynamique élevée du scintillement ou de la diffraction de la lumière sur un objet.

Des dispositifs d'affichage conventionnels sont divulgués par WO 2012/172044 A1 et US 5808589 A.

### RESUME DE L'INVENTION

Pour pallier aux limitations des dispositifs existants en terme de représentation des reflets, le dispositif d'affichage d'images suivant l'invention est défini dans la rev. indépendante 1 et comporte un terminal de visualisation dont un écran est raccordé fonctionnellement à un système de diffusion d'images numériques pour afficher une première image sur ledit écran et comporte en outre:
- un projecteur raccordé fonctionnellement au système de diffusion d'images numériques pour projeter une seconde image sur une surface réfléchissante suivant un mode de réflexion principalement spéculaire, ladite surface réfléchissante présentant un ou des motifs géométriques en relief de sorte que des rayons lumineux incidents soient réfléchis dans des directions variables en fonction d'emplacements de points de réflexion sur ladite surface réfléchissante des dits rayons incidents ;
- des moyens de superposition optique de l'écran et de la surface réfléchissante de sorte que pour un observateur utilisant le dispositif d'affichage, une seconde image projetée sur la surface réfléchissante se superpose à une première image affichée sur l'écran pour former l'image observée.

Il est ainsi obtenu une séparation des moyens d'affichage de l'image conventionnelle et des moyens d'affichage de représentations complémentaires de la première, ces derniers n'étant plus contraints par les performances des moyens d'affichage des images et permettant de mettre en oeuvre des dispositifs assurant une dynamique élevée dans les performances lumineuses et sans compromis sur la qualité des images affichées de la première image.

Avantageusement, le système de diffusion d'images est configuré pour transmettre au projecteur une ou des secondes images synchronisées avec une ou des premières images transmises à l'écran. Il est ainsi obtenu une cohérence dans l'espace et dans le temps de la seconde image et des attributs qu'elle comporte avec l'image affichée.

Dans une forme de réalisation, la seconde image est une image de reflets et ou de scintillements d'une première image avec laquelle ladite seconde image est associée dans le système de diffusion d'images numériques. Le dispositif d'affichage permet alors de représenter une image de qualité graphique aussi élevée que souhaitée et possible avec des effets de reflets et scintillements présentant une luminosité supérieure aux capacités de l'écran d'affichage et avec un rendu réaliste du fait des phénomènes physiques exploités par la surface réfléchissante.

Dans une forme de réalisation, le système de diffusion d'images numériques comporte des moyens de génération d'une image en trois dimensions d'un objet dont une première image est transmise à l'écran et comporte des moyens de génération quasi simultanée d'au moins une seconde image représentative des reflets sur l'objet représenté par ladite première image. Il est ainsi obtenu un dispositif d'affichage autonome et capable d'interactions avec un opérateur pour agir sur les images affichées en bénéficiant des performances de l'invention.

Dans une forme particulière de réalisation, le dispositif d'affichage comporte en outre des moyens pour réaliser des micro-déplacements de la seconde image projetée autour d'une position théorique de ladite seconde image, micro-déplacements d'une amplitude au plus d'un même ordre de grandeur que des dimensions des motifs géométriques en relief de la surface réfléchissante. Il est ainsi obtenu un effet dynamique, notamment un scintillement, sur l'image affichée lorsque tous les autres paramètres sont par ailleurs fixes.

Dans une forme de réalisation, le projecteur est un projecteur vidéo adapté à la projection des secondes images ou un projecteur à balayage à faisceaux laser. Il est ainsi possible d'adapter les conditions de projection de la seconde image en fonction d'un environnement, d'une dimension de l'image projetée ou de la dynamique recherchée dans les effets apportés par la seconde image.

Dans une forme de réalisation, un support de la surface réfléchissante est fixé sur ou très près de la face d'affichage de l'écran, avec une face arrière dudit support de la surface réfléchissante située du côté de l'écran et une face avant dudit support de la surface réfléchissante située du côté du projecteur, ledit support de la surface réfléchissante apparaissant essentiellement transparente pour des rayons lumineux arrivant sur la face arrière et essentiellement réfléchissant pour des rayons lumineux arrivant sur la face avant. Suivant cet agencement il est obtenu un ensemble compact dans lequel sont évités des effets de parallaxe.

Dans ce mode de réalisation, avantageusement la surface réfléchissante présente des motifs géométriques en relief dont des dimensions caractéristiques sont telles que la première image observée par transparence à travers le support de la surface réfléchissante n'est pas déformée de manière sensiblement perceptible pour un observateur situé à une distance d'observation prévue, par exemple de l'ordre de deux fois une diagonale de l'écran. Ainsi, la qualité de l'image affichée sur l'écran n'est pas affectée de manière sensible pour un observateur bien que vue par transparence au travers du support de la surface réfléchissante.

Dans une autre forme de réalisation, une lame semi-transparente inclinée est située sur un chemin optique entre une fenêtre d'observation et l'écran et agencée pour renvoyer vers la fenêtre d'observation des rayons lumineux réfléchis par la surface réfléchissante de sorte qu'une seconde image projetée sur la surface réfléchissante se superpose optiquement à une première image affichée sur l'écran.

Suivant cette forme de réalisation, il est évité que l'image affichée sur l'écran ne soit vue au travers du support de la surface réfléchissante, évitant d'éventuelles déformations perceptibles de l'image, et supprimant ainsi l'exigence de transparence du support de la surface réfléchissante ce qui permet d'utiliser pour le support de la surface réfléchissante des technologies sinon interdites par l'exigence de transparence.

Pour répondre à des besoins de simuler des reflets et ou des scintillements produisant des effets visuels variés, le ou les motifs géométriques en relief de la surface réfléchissante sont aléatoires ou pseudo aléatoires sur au moins une partie de ladite surface réfléchissante, et ou le ou les motifs géométriques en relief de la surface réfléchissante sont structurés pour former un motif régulier répétitif sur au moins une partie de ladite surface réfléchissante, et ou le ou les motifs géométriques en relief de la surface réfléchissante sont corrélés à tout ou partie de formes d'un objet représenté par la première image.

Différents types de motifs géométriques pouvant être superposés sur tout ou partie de la surface réfléchissante pour produire un relief complexe des motifs géométriques.

Suivant que des effets sont recherchés sur tout ou partie des objets affichés, la surface réfléchissante se superpose à la totalité de l'image affichée par l'écran ou ne se superpose qu'à une portion de l'image affichée par l'écran.

Suivant des formes de réalisation du dispositif d'affichage, le relief des motifs géométriques du côté de la face réfléchissante du support de la surface réfléchissante sont le résultat d'un gaufrage d'un film présentant une surface réfléchissante, d'un formage d'un support d'une surface réfléchissante, d'un moulage ou d'un usinage d'un support d'une surface réfléchissante, d'une dispersion aléatoire de paillettes réfléchissantes à la surface d'un support, d'une dispersion aléatoire de paillettes réfléchissantes dans un matériau transparent d'un support.

L'invention concerne également un procédé de simulation visuelle de reflets et scintillements d'un objet présenté sous la forme d'une première image dudit objet affichée sur un écran selon la rev. indépendante 14.

Le procédé comporte les étapes de :
- génération d'une seconde image superposable à la première image, ladite seconde image ne représentant, sur un fond sombre uni, avantageusement aussi proche que possible du noir, que les zones de l'objet devant comporter des reflets et ou scintillements, puis ;
- projection de la seconde image sur une surface réfléchissante suivant un mode de réflexion principalement spéculaire ;
- superposition optique de la seconde image projetée sur la surface réfléchissante sur la première image affichée sur l'écran pour former une image observable de l'objet incorporant des effets de reflets et ou de scintillements.

Il est ainsi obtenu une image résultante présentant des reflets et des scintillements dont la production est indépendante de l'écran utilisé pour afficher la première image et qui permet de créer des effets dynamiques impossible, à obtenir par le moyen du seul écran, puisque résultant de phénomènes physiques de natures différentes.

Dans un mode de mise en oeuvre, la première image est issue d'une photographie de l'objet présenté et la seconde image est réalisée par un traitement numérique de la photographie de l'objet de laquelle sont identifiées des surfaces et zones de reflets et de scintillements et ou par synthèse d'images.

Il peut ainsi être obtenu une cohérence spatiale souhaitée entre la photographie de l'objet visualisé sur l'écran et reflets et scintillements simulés.

Dans un mode de mise en oeuvre, la première image est une image de synthèse de l'objet présenté et dans lequel la seconde image est une image de synthèse des zones de l'objet devant comporter des reflets et ou scintillements.

Dans ce mode, le traitement numérique de l'image de synthèse et des reflets et scintillements peut être réalisé de manière conjointe par des unités de calculs communes ou synchronisées, en particulier dans le cas d'images dynamiques.

Dans un mode de réalisation, la seconde image est une image monochrome des zones de l'objet devant comporter des reflets et ou scintillements ou, dans un autre mode de réalisation, la seconde image est une image polychrome des zones de l'objet devant comporter des reflets et ou scintillements, les couleurs étant adaptées aux couleurs des reflets ou scintillements souhaités.

Il est ainsi possible d'adapter les secondes images aux effets recherchés sur la première image.

Dans un mode de mise en oeuvre, la première image est une image animée et la seconde image projetée est animée pour être en correspondance à chaque instant avec la première image affichée.

Il est ainsi obtenu des objets animés dans lesquels les reflets et les scintillements, modifiés à chaque image par les conditions différentes de chaque image affichée et de chaque image projetée produisent un rendu réaliste à un observateur.

### BREVE DESCRIPTION DES DESSINS

La présente invention est décrite en référence aux figures qui, de manière non limitative, représentent schématiquement :
- figure 1 :: une représentation d'une image affichée sur un écran représentant un objet soumis aux scintillements ;
- figure 2a :: une illustration d'un premier exemple de dispositif d'affichage suivant l'invention et de ses différents composants principaux ;
- figure 2b :: une illustration partielle du premier exemple de la figure 2a dans laquelle les éléments optiques sont séparés les uns des autres afin d'en révéler l'agencement relatif ;
- figure 3 :: une représentation schématique des phénomènes de réflexion des rayons lumineux projetés sur une surface réfléchissante ;
- Figures 4a et 4b :: une représentation d'un deuxième exemple de dispositif, la figure 4b étant une représentation en coupe illustrant l'agencement des différents composants principaux ;
- figure 5 :: un synoptique simplifié du procédé mis en oeuvre.

### DESCRIPTION DETAILLEE DE MODES DE REALISATION DE L'INVENTION

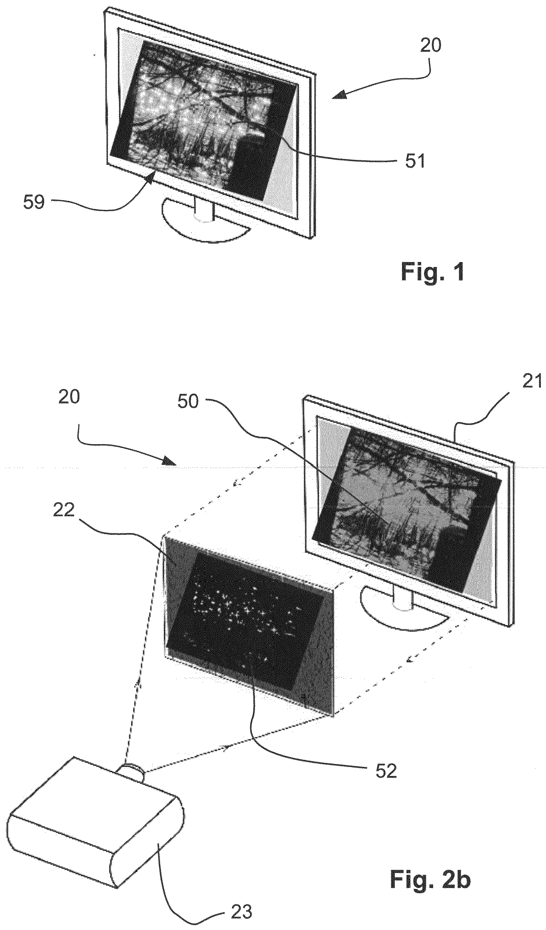

La figure 1 représente un terminal 20 de visualisation selon l'invention affichant une image 59.

L'image 59 est dans l'invention le résultat d'une superposition optique, s'appuyant autant que de besoins sur des moyens mécaniques, d'une première image 50 numérique, qui peut être de synthèse ou obtenue par la photographie d'un objet réel, et d'une seconde image 52 représentative de reflets ou scintillements 51 de l'image 59.

Le terminal est destiné à être regardé par un observateur de l'image 59 et les termes et expressions utilisés dans la présente description sont, sauf évidence ou précision contraire, à considérer dans les sens communs qui leurs sont donnés dans le domaine des systèmes d'affichage d'images.

Sur l'image 59 les reflets de sources lumineuses ou des scintillements 51 observés par une personne regardant l'écran sont symbolisés, sur les dessins des figures 1 et 2b, par des motifs en forme d'étoiles.

Les reflets ou scintillements ainsi symbolisés peuvent être fixes ou apparaître scintillants, c'est-à-dire relativement instables en brillance à un observateur, par exemple du fait de mouvements de tête même relativement imperceptibles, tout en restant sensiblement en un même emplacement de l'objet représenté par la première image 50.

Les reflets et les scintillements de l'objet réel correspondent dans le cas présent à des réflexions de sources lumineuses ou à la diffraction de rayons lumineux sur des arêtes de l'objet ou à la réfraction de rayons lumineux dans des parties transparentes de l'objet visualisé.

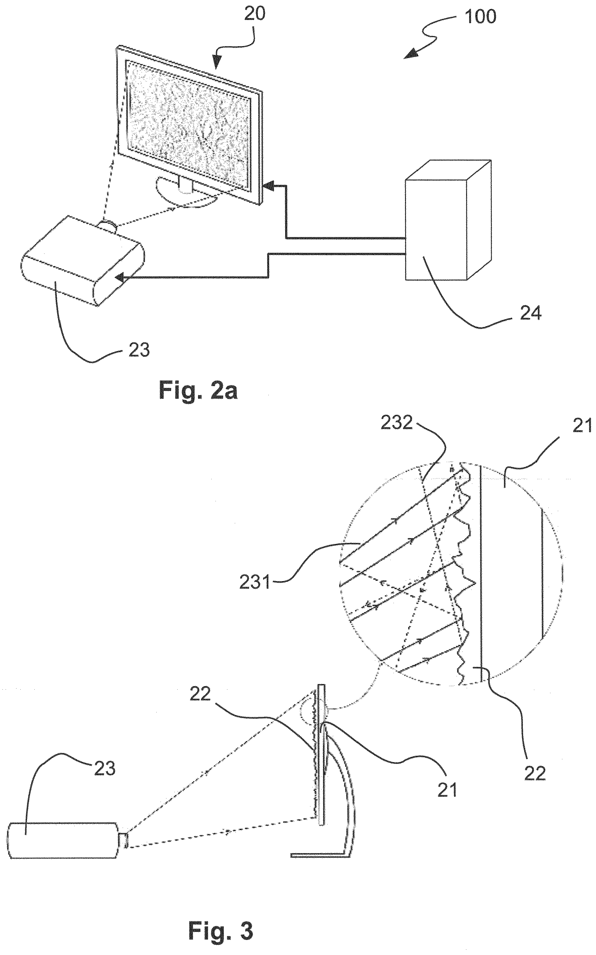

La figure 2a représente un dispositif d'affichage 100 suivant un premier exemple de réalisation de l'invention.

Le dispositif d'affichage comporte principalement :
- le terminal 20 de visualisation ;
- un projecteur 23 adapté à la projection d'images lumineuses ;
- un système de diffusion d'images numériques 24.

Comme il est illustré sur la figure 2b montrant une vue éclatée du terminal 20, ledit terminal de visualisation comporte principalement un écran 21 et un support 22 d'une surface réfléchissante.

L'écran 21 est un écran conventionnel qui peut être de tout type conçu pour afficher des images avec les photons lumineux émergeant ou diffusés par l'écran.

Il est, dans cet exemple de réalisation, exclu que l'écran 21 utilise un principe de réflexion d'une image projetée depuis un côté de l'écran où est également situé un observateur de l'image.

Par exemple l'écran image est un écran en technologie LCD dans laquelle l'image visible résulte de la transparence contrôlée de points colorés, formant une matrice sur une face d'affichage de l'écran, et rétro-éclairés par une lumière blanche. L'écran image 21 est choisi en fonction des performances d'affichage souhaitées du point de vue de ses dimensions, de sa résolution, de ses rendus de couleurs, de sa luminosité et de son contraste parmi les nombreux modèles d'écran disponibles.

Le support 22 de la surface réfléchissante est par exemple un film qui présente la qualité d'apparaître essentiellement transparent à une lumière arrivant sur une face arrière dudit film réfléchissant et d'apparaître essentiellement réfléchissant et produisant une réflexion spéculaire d'une lumière arrivant sur une face avant de ladite surface réfléchissante.

Le suppot 22 de la surface réfléchissante présente donc des caractéristiques similaires sur le plan optique à celles d'un miroir sans tain, mais sera de préférence réalisé avec une feuille d'un polymère transparent comme support et il sera recherché des coefficients de transmission lumineuse aussi élevée que possible pour les rayons lumineux arrivant sur la face arrière et de réflexion également aussi élevé que possible pour des rayons lumineux arrivant sur la face avant, dans les domaines des angles d'incidence obtenus du fait des montages mécaniques et optiques du dispositif d'affichage 100.

Le support 22 de la surface réfléchissante est fixé sur l'écran 21 avec une face arrière du support apposée sur tout ou partie de la surface dudit écran sur laquelle est affichée la première image 50.

Sur la figure 2b support 22 de la surface réfléchissante est représenté distant de la surface de l'écran 21 pour la clarté de la description, mais il doit être compris dans cet exemple de réalisation que cette distance est nulle, tout au plus très faible, tout comme une épaisseur du support, afin d'éviter des aberrations liées à des effets de parallaxe comme il sera compris de la suite de la description. Le support 22 de la surface réfléchissante est par exemple un film gaufré, dans une forme de réalisation de manière irrégulière de sorte à éviter un tramage régulier du gaufrage.

Le gaufrage se traduit par des motifs géométriques en relief sur la face réfléchissante de la surface réfléchissante du film.

Un gaufrage du film est par exemple obtenu en froissant une feuille en polymère relativement rigide dudit film et en remettant à plat ladite feuille qui conserve en mémoire les déformations subies lorsqu'elle a été froissée.

De manière industrielle, le gaufrage du film peut également être réalisé par un estampage dudit film réfléchissant entre un poinçon et une matrice, ledit poinçon et ladite matrice présentant des surfaces dont les reliefs reproduisent le motif du gaufrage à réaliser sur le film réfléchissant. En pratique toute technique permettant de réaliser un film réfléchissant dont une surface réfléchissante présente des facettes avec une répartition aléatoire ou pseudo aléatoire peut être utilisée sous réserve de permettre de réaliser le film réfléchissant avec les dimensions souhaitées et avec les caractéristiques de réflexion spéculaire permettant d'obtenir l'effet recherché.

Il est ainsi possible de réaliser le support de la surface réfléchissante par moulage ou usinage d'un matériau réfléchissant, par dépôt ou intégration de paillettes réfléchissantes sur ou dans un support.

Dans l'exemple du premier mode de réalisation, le support de la surface réfléchissante est en outre réalisé dans un matériau transparent qui permet l'observation d'une image affichée sur l'écran 21 devant lequel est placé le support de la surface réfléchissante.

Ainsi, suivant la structure obtenue de la surface réfléchissante, des rayons lumineux incidents 231 projetés par le projecteur 23 sont réfléchis par réflexion spéculaire dans des directions aléatoires en fonction de l'emplacement sur la surface réfléchissante où ils aboutissent, donnant aux rayons lumineux réfléchis 232 des directions aléatoires ou pseudo aléatoires comme il est représenté schématiquement sur la figure 3, sur le détail de laquelle figure les traits continus représentent des rayons lumineux incidents issus d'une source et les traits discontinus représentent les rayons réfléchis, qui sont orientés dans des directions en fonction non seulement de la direction du rayon incident mais également du point considéré de la surface de la surface réfléchissante.

Dans un mode de réalisation alternatif, les motifs géométriques en relief sur la surface réfléchissante comportent, au moins sur une partie de la surface réfléchissante, un motif régulier répétitif dont la géométrie et les dimensions sont choisies pour réfléchir la lumière en générant des effets de scintillement structurés par ledit motif régulier, à la manière de certains filtres à effets mis en oeuvre dans le domaine de la photographie, ledit motif régulier répétitif étant le cas échéant superposé à des motifs géométriques aléatoires.

Dans un mode de réalisation alternatif, les motifs géométriques en relief sur la surface réfléchissante comportent, au moins sur une partie de la surface réfléchissante, un motif dont la géométrie et les dimensions sont choisis pour correspondre à des formes et surfaces de l'objet représenté par une image 50 devant être affichée avec le dispositif d'affichage 100 de sorte à réfléchir la lumière de manière sélective pour les zones concernées de l'image. Il peut en particulier dans ce mode de réalisation être simulé des réflexions spéculaires sur des surfaces d'un objet à facette.

Comme dans le mode précédent, ledit motif est le cas échéant superposé à des motifs géométriques aléatoires et ou réguliers.

Le projecteur 23 est agencé dans le dispositif d'affichage 100 par rapport au terminal 20 de visualisation pour projeter des images sur la surface d'affichage dudit terminal et donc sur la face avant réfléchissante du support 22 de la surface réfléchissante.

Avantageusement, le projecteur 23 est agencé de manière à ne pas gêner un observateur des images affichées sur le terminal 20.

Dans l'agencement du projecteur 23 il sera cependant recherché à ce qu'un axe optique dudit projecteur reste proche de la direction d'observation de l'écran 21 de sorte que la puissance lumineuse réfléchie par la surface réfléchissante soit maximisée dans la direction de l'observateur.

Par exemple le projecteur 23 est fixé dans un plan médian de l'écran 21 mais décalé vers le haut ou vers le bas par rapport à l'axe de l'écran correspondant à une normale à la surface d'affichage issue du centre de l'écran.

D'autres exemples de décalage par rapport à l'écran sont possibles, et dans tous les cas le dispositif d'affichage prendra en considération le décalage du projecteur pour que l'image soit corrigée des effets de perspective propres à la configuration retenue et qu'une image projetée présente les dimensions et proportions qu'elle aurait en étant projetée sans le décalage considéré.

Par exemple les corrections correspondantes sont paramétrées dans le projecteur compte tenu de sa position.

Les corrections correspondantes peuvent également être réalisées directement sur les images qui sont transmises par le système 24 au projecteur par une anamorphose des dites images.

Le système de diffusion d'images numériques 24 peut consister en tout système configuré pour transmettre et synchroniser des images sous forme numérique au terminal 20 d'une part et au projecteur 23 d'autre part.

Par exemple le système de diffusion d'images numériques 24 incorpore une unité de calculs, par exemple un ordinateur avantageusement architecturé avec des processeurs graphiques, programmée pour le traitement et la manipulation des images.

Les images transmises par le système de diffusion d'images numériques peuvent être fixes ou animées.

Le système de diffusion d'images numériques 24 peut consister en des mémoires d'images et un terminal de gestion et de sélection des images fixes ou animées, ou, dans une forme de réalisation, comporter un générateur d'images de synthèse capable de produire des images en temps réel en fonction de commandes, par exemple d'orientation, d'un objet virtuel.

Une particularité du système de diffusion d'images numériques 24 réside dans le couplage de premières images 50 transmises pour être affichées de manière synchronisée sur l'écran 21 avec des secondes images 52 transmises pour être projetées sur l'écran de visualisation 20 par le projecteur 23.

Ainsi à chaque première image 50 transmise à l'écran 21, au moins une seconde image 52 est transmise au projecteur 23, seconde image qui est projetée sur l'écran de visualisation 20 sur lequel des parties lumineuses de la dite seconde image, réfléchie par la surface réfléchissante, sont observées en réflexion principalement spéculaire, superposées à la première image 50 affichée par l'écran 21, observée par transparence sur ledit écran du fait de la transparence du support 22 de la surface réfléchissante, pour former l'image 59 observée.

Chaque rayon lumineux issu du projecteur 23 et correspondant à un point d'une partie lumineuse de la seconde image projetée est en outre réfléchi suivant une direction qui est fonction de l'orientation dans l'espace d'un plan osculateur de la face avant du support 22 de la surface réfléchissante à l'emplacement où le rayon lumineux considéré atteint ladite surface réfléchissante, comme l'illustre le détail agrandi de la figure 3. Du fait du relief de la surface réfléchissante, par exemple résultant du gaufrage du film réfléchissant lorsque cette solution est utilisée pour former la surface réfléchissante, l'orientation des plans osculateurs en différents points de ladite surface réfléchissante et donc la direction dans laquelle un rayon lumineux incident est réfléchi est donc, dans une certaine mesure, aléatoire et crée une instabilité qui produit un effet de scintillements sur des points lumineux localisés.

Pour obtenir un effet de scintillements marqué, les secondes images 52 consistent de préférence en des images noires constellées de surfaces blanches ou colorées pour lesquelles le projecteur 23 génère des faisceaux lumineux qui se réfléchissent sur la surface réfléchissante dans des directions plus ou moins aléatoires, par exemple en raison du gaufrage du film réfléchissant.

D'autres caractéristiques détaillées du dispositif d'affichage 100 seront mieux comprises à la lumière d'exemples de réalisations et de mise en oeuvre pour des cas particulier d'affichage.

### Premier exemple.

Dans un premier exemple de réalisation et de mise en oeuvre il est transmis une première image 50 fixe qui est affichée sur l'écran 21 du terminal 20 de visualisation.

Une telle première image qui est transmise depuis une mémoire du système de diffusion d'image numérique 24 à l'écran 21 est par exemple une image d'un objet issue d'une photographie de l'objet ou une image de synthèse obtenue à partir d'une représentation virtuelle de l'objet.

La première image 50 présente les attributs souhaités être affichés pour ce qui concerne les contours, les couleurs, les contrastes, les textures, les ombrages au moins dans les limites de performances dont est capable l'écran 21 choisi.

Il s'agit ici d'un affichage conventionnel d'une image sur un écran émissif.

Au moyen de ce seul écran, l'image peut présenter un réalisme poussé mais les limites des écrans disponibles en termes de brillance de points isolés limitent les capacités de restitution de reflets de lumière sur l'objet.

Pour superposer des reflets lumineux et scintillements sur la première image 50, il est préalablement créé une seconde image 52 de l'objet représenté sur laquelle seuls des surfaces devant produire un effet de reflets et de scintillements sont représentées par la dite seconde image.

Il en résulte donc une seconde image 52 résultat de la projection, au moyen d'un projecteur 23, sur un fond noir de surfaces lumineuses aux emplacements des reflets et scintillements souhaités.

Chaque point d'une surface lumineuse de la seconde image 52 correspond en projection dans le dispositif d'affichage à un point ou une zone particulière de la première image 50 sur l'écran 21 sur lequel il est souhaité créer un effet de reflets ou de scintillements.

Les rayons lumineux incidents, émis par le projecteur 23 et correspondant aux points lumineux de la seconde image 52, sont réfléchis par réflexion spéculaire en arrivant sur la surface réfléchissante, et produisent un effet lumineux dont l'intensité peut être très supérieure aux possibilités de l'écran 21, puisqu'il est l'effet de la réflexion directe de la lumière du projecteur plutôt qu'une diffusion ou d'une réflexion diffuse.

Du fait des motifs géométriques en relief, résultant d'un gaufrage d'un film réfléchissant ou d'un autre procédé, de la surface réfléchissante, les directions des rayons lumineux, issus du projecteur 23, réfléchis produisent l'effet de scintillements et ou de reflets recherchés.

L'effet de scintillement est augmenté du fait que tous les mouvements d'un observateur par rapport au dispositif d'affichage 100 auront pour effet de modifier les positions sur l'image des reflets correspondant à des rayons lumineux incidents émis par le projecteur réfléchis dans sa direction d'observation par la surface réfléchissante.

Dans une forme de réalisation, une première image 50 est associée à plusieurs secondes images 52 qui sont projetées successivement, le cas échéant avec un fondu enchaîné des dites secondes images, donnant ainsi à l'objet représenté sur la première image 50, bien que fixe, une impression dynamique de brillance et de reflets.

Dans une autre forme de réalisation, une unique seconde image 52 est associée à plusieurs premières images 50 qui sont affichées successivement, pouvant ainsi donner à l'objet représenté, dont les parties scintillantes sont fixes, un mouvement ou un contexte le faisant paraître d'autant plus réaliste.

### Deuxième exemple

Dans un deuxième exemple de réalisation et de mise en oeuvre, il est affiché sur l'écran 21 une première image 50 animée.

La première image peut être animée de manière prédéfinie et dans ce cas le système de diffusion d'images numériques 24 affiche un film correspondant à un scénario établi.

L'image peut être animée par un opérateur, opérateur qui peut être l'observateur de la première image 50, par exemple par une commande agissant sur le système de diffusion d'images numériques 24 pour modifier la première image, par exemple agir sur une orientation d'un objet dans l'espace virtuel de l'image. Une telle première image est avantageusement une image de synthèse en trois dimensions qui est manipulée par l'observateur par une commande telle qu'une boule de désignation ou une souris.

Dans ce mode de réalisation, le système de diffusion d'images numériques 24 transmet au projecteur 23, à chaque instant, une seconde image 52 de reflets correspondant à la première image 50 transmise à l'écran 21.

Suivant le mode de génération des images animées, les images de reflets sont soit pré-enregistrées pour correspondre au film devant être affiché pour les images 50, soit calculées en temps réel pour correspondre à l'image 50 affichée.

Dans ce dernier cas, l'objet manipulé sera associé à un modèle numérique permettant de déterminer les points de l'objet devant produire des reflets et scintillements en fonction de l'orientation de l'objet dans un repère d'observateur et en fonction de la position de sources d'éclairement de l'objet.

Le système de diffusion d'images numériques 24 assure la synchronisation des premières images 50 transmises à l'écran 21 avec les secondes images 52 transmises au projecteur pour qu'à tout instant une seconde image projetée soit en cohérence avec une première image affichée. Une telle synchronisation est assurée par des moyens conventionnels tels qu'ils sont mis en oeuvre par exemple dans la projection d'images stéréoscopiques.

### Troisième exemple

Dans une forme dérivée de la solution proposée au deuxième exemple, la première image 50 est une image animée obtenue par des moyens cinématographiques, par exemple au moyen d'une caméra numérique.

Les images fournies par la caméra sont reçues par le système de diffusion d'images numériques 24 dans lequel elles sont traitées, ou après avoir été traitées par un système distinct, pour identifier les emplacements sur lesquels doivent être produits les effets de reflets et de scintillement.

Suivant une méthode pour identifier ces points de scintillement, l'objet filmé avec la caméra numérique est lui-même soumis à un éclairement adapté pour faire ressortir la lumière réfléchie et réfractée naturellement par l'objet.

Les images obtenues avec la caméra numérique sont alors traitées pour obtenir des images des emplacements de l'objet émettant une lumière réfléchie ou réfractée et pour réaliser des secondes images 52 isolées et synchronisées avec les premières images issues du film et sur lesquelles ont été éventuellement éliminés, par des moyens numériques, les reflets.

Les premières images 50 issues du film de l'objet réel et les secondes images 52 sont alors superposées sur le terminal 20 de visualisation du dispositif d'affichage 100 de sorte à restituer l'affichage des images de l'objet réel avec les effets de reflets et de scintillements apparaissant aux emplacements souhaités sur l'objet compte tenu de la synchronisation des premières et secondes images.

Il doit être noté que le support 22 de la surface réfléchissante, bien que marqué des motifs géométriques en relief, est pratiquement invisible et sans effet sur la qualité d'observation de la première image 50 affichée sur l'écran 21 du fait de petites hauteurs du relief des motifs, d'un ordre de grandeur du millimètre ou moins, du fait qu'il est appliqué directement sur la surface de l'écran 21, ou pour le moins très près, et du fait que ledit écran est de préférence choisi pour produire une image contrastée et relativement lumineuse, dans le respect des caractéristiques colorimétriques souhaitées.

Dans une forme de réalisation, le projecteur 23 est un projecteur vidéo qui projette les secondes images 52 de sorte à assurer leurs superpositions avec les premières images 50 affichées sur l'écran 21 et à produire les effets de reflets et de scintillements aux emplacements souhaités pour obtenir l'image 59 résultante. Dans ce cas une seconde image 52 est une image noire, ou pour le moins de couleur sombre et neutre, donc ne transmettant pas la lumière du projecteur, sauf aux emplacements correspondant à des zones transparentes, incolores ou colorées, correspondant à des rayons lumineux du projecteur devant aboutir aux emplacements souhaités sur le terminal 20 de visualisation.

Dans une autre forme de réalisation, le projecteur 23 est un projecteur d'image mettant en oeuvre un ou plusieurs faisceaux laser dont le balayage synchronisé avec l'allumage et l'extinction des faisceaux laser projette des rayons incidents lumineux sur l'écran de visualisation 20 aux emplacements souhaités pour créer les effets de réflexions et de scintillements.

Quel que soit le mode réalisation du dispositif d'affichage, dans un mode de réalisation pour augmenter l'effet de scintillement de l'image obtenue sur le terminal 20 de visualisation, les secondes images 52 projetées par le projecteur 23 sur la surface réfléchissante sont soumises à un déplacement continu suivant des petits mouvements plus ou moins aléatoires autour de leurs positions théoriques, par exemple des mouvement orbitaux, dont l'amplitude est du même ordre de grandeur que les motifs de la surface réfléchissante, par exemple résultant d'un gaufrage du film réfléchissant.

Ces micro-déplacements ont pour effet d'augmenter l'effet de scintillement en induisant une instabilité des reflets sur la surface réfléchissante, et sans que le mouvement soit manifestement perceptible par rapport à la première image 50.

Dans une forme perfectionnée, la seconde image 52 est une image de synthèse réalisée par le système de diffusion d'images numériques 24 et les micro-déplacements sont appliqués individuellement et de manière non corrélée à différentes zone de la seconde image 52.

Ces différentes formes de réalisation permettent de produire un scintillement plus ou moins intense, en particulier pour des images fixes.

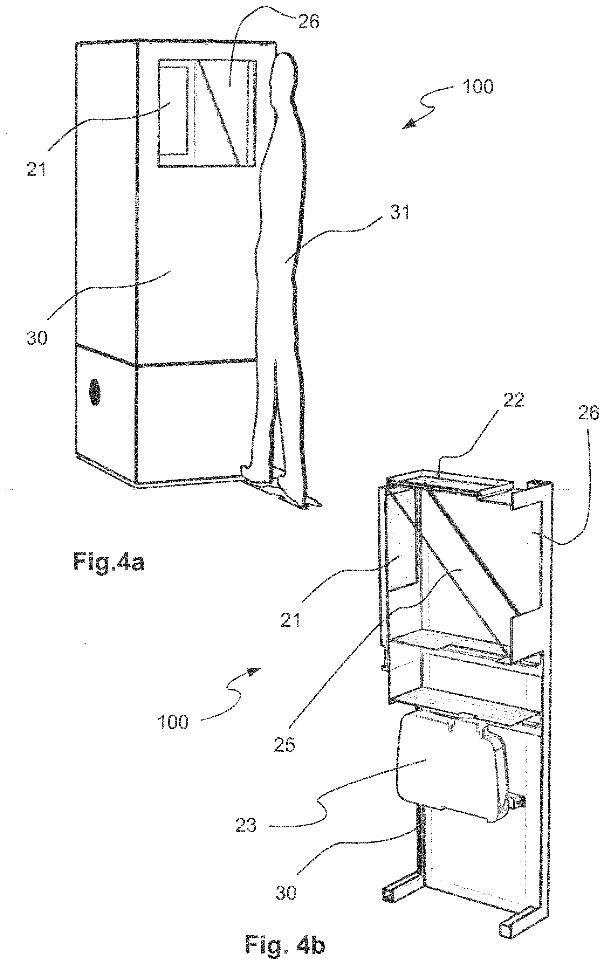

Les figures 4a et 4b illustrent un second mode de réalisation de l'invention.

Sur les figures 4a et 4b, les images visualisées ne sont pas représentées.

Ce second mode comporte les mêmes éléments que suivant le premier mode mais dans un agencement différent pour produire la superposition de reflets lumineux sur une surface réfléchissante en coïncidence avec des emplacements souhaités sur une image affichée par un écran 21.

Cependant, suivant ce second mode, le support 22 de la surface réfléchissante n'est pas fixé sur ou très proche de l'écran 21 mais est séparé dudit écran tout en lui étant superposé de manière optique par un système de lame semi-transparente 25, par exemple inclinée à 45° dans la forme de réalisation illustrée.

Comme il est visible dans la vue en perspective et en coupe du dispositif de la figure 4b, l'écran 21 se trouve en position sensiblement verticale dans une partie arrière d'un support 30, dans l'axe d'une fenêtre d'observation 26 par laquelle un observateur 31 est en mesure de le regarder par une vision directe à travers la lame semi-transparente 25.

Le projecteur 23, situé dans une partie inférieure du dispositif d'affichage 100, est agencé pour projeter l'image des reflets sensiblement verticalement à travers la lame semi-transparente 25 sur la surface réfléchissante qui est placée dans un plan horizontal au-dessus de ladite lame semi-transparente de sorte que l'observateur 31 devant la fenêtre d'observation 26 voit la surface réfléchissante, c'est-à-dire en pratique les rayons lumineux qu'elle renvoie dans sa direction par réflexion sur la lame semi-transparente 25.

Il doit être noté que dans ce mode de réalisation, la première image 50 n'est pas observée par transparence à travers le support 22 de la surface réfléchissante et que ledit support n'a donc pas d'exigence de transparence.

Le support peut dans ce cas être opaque et comporter une surface réfléchissante optimisée pour réfléchir par réflexion spéculaire les rayons lumineux avec un rendement optimal, en pratique proche de l'unité. La surface réfléchissante est par exemple obtenue par métallisation d'une surface préalablement formée dans un matériau polymère. La surface réfléchissante est par exemple obtenue par le gaufrage d'une feuille mince métallique présentant une surface correspondant à un état poli.

La superposition des effets de reflets et de l'image observée résulte comme dans le premier mode de réalisation de la synchronisation dans l'espace, par le principe de superposition optique des deux images au moyen de la lame semi transparente, et dans le temps de l'image 50 de l'objet affichée sur l'écran 21 avec celle des reflets 52 projetée par le projecteur 23 sur la surface réfléchissante.

Les mêmes variantes que celles exposées pour le premier mode de réalisation peuvent être appliquées avec ce second mode de réalisation.

On comprendra ici que les deux modes illustrés ne sont que des exemples de réalisation et que tout dispositif d'affichage incorporant un dispositif optique ou mécanique qui permet de superposer la projection d'une image de reflets projetée sur une surface réfléchissante, présentant une structure similaire à celle décrite précédemment, avec une image affichée sur un écran peut être mis en oeuvre dans le contexte de l'invention.

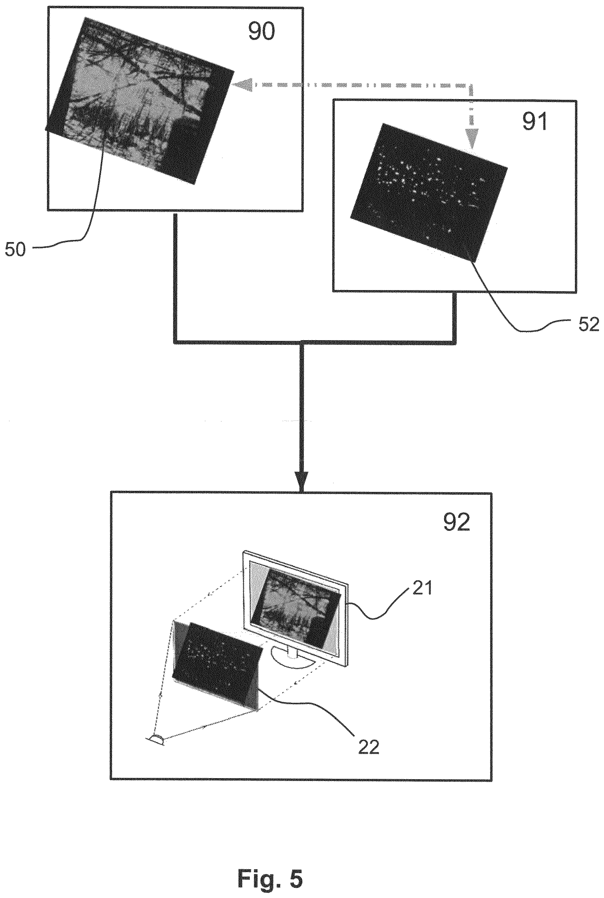

L'invention concerne également un procédé, schématisé sur la figure 5, pour l'affichage d'images sur écran avec des effets de reflets lumineux et ou de scintillements plus ou moins intenses, qu'un écran d'affichage conventionnel n'est pas en mesure de restituer avec une dynamique souhaitée.

Suivant le procédé dans une première étape 90 une première image 50 d'un objet à afficher est créée.

La dite première image 50 de l'objet à afficher est une image obtenue par photographie d'un objet réel ou par synthèse numérique de l'objet.

La dite première image 50 de l'objet à afficher est une image fixe ou une image animée.

Dans une deuxième étape 91 une seconde image 52, corrélée à la première image 50, est créée dans laquelle seuls les points et ou surfaces de la première image 50 sur lesquels des reflets et ou des scintillements doivent apparaître sont représentés de manière contrastée sur un fond uniforme.

En pratique, au moins au moment de la projection de ladite seconde image, le fond uniforme est sombre et les points correspondant à des reflets sont blancs ou colorés suivant l'effet recherché.

Les première et deuxième étapes, qui précédent une étape d'affichage peuvent être réalisée dans un ordre quelconque voire simultanément.

Dans une troisième étape 92, la première image 50 est affichée sur un écran 21 d'un terminal 20 de visualisation, dont la surface d'affichage est en coïncidence optique avec une surface de réflexion une surface réfléchissante présentant un ou des motifs géométriques en relief, par exemple une surface présentant un relief aléatoire obtenu par un gaufrage d'un film réfléchissant, coïncidence optique résultant d'une superposition physique de la surface réfléchissante sur l'écran ou d'un agencement de l'écran et de la surface réfléchissante dans un dispositif optique à lame semi-transparente, et la seconde image 52 est projetée simultanément, au moins en terme de perception visuelle, sur la surface réfléchissante de sorte que ladite seconde image représentative des scintillements et des reflets souhaités sur la première image 50 coïncide, dans le temps et dans l'espace, sur le dit terminal avec ladite première image, pour former une image 59 résultante comportant les effets de scintillements et de reflets.

Dans le cas d'une première image 50 animée, les étapes précédentes sont reprises pour chacune des images fixes dont la succession produit l'image animée.

Le dispositif d'affichage 100 s'avère particulièrement adapté à la présentation d'images d'objets dont le réalisme est amélioré par la présence de reflets et scintillements de la lumière éclairant ces objets.

Par exemple des objets tels que ceux présentant des surfaces réfléchissantes et ou diffractant la lumière, liste non exhaustive :
- objets avec des surfaces métalliques polies ou chromées ;
- bijoux présentant des surfaces mattes et des incrustations de pierres précieuses ;
- pierres taillées ou éclatées présentant des inclusions brillantes ;
- gemmes polis ou taillés ;
- cristaux naturels et cristal ou verre taillé, par exemple dans un lustre ;
- surfaces scintillantes telles que la surface d'un liquide, par exemple la mer, légèrement agitée sous un éclairage fort et directif comme l'éclairage du soleil.

Le dispositif d'affichage peut également être utilisé pour la représentation avec un réalisme augmenté d'objets émettant une lumière propre mais pouvant être perçue comme relativement intense et scintillante comme par exemple la lumière des étoiles dans un ciel sombre ou la lumière émise par un phare ou de manière générale par une lampe.

Ainsi l'invention trouve application chaque fois que des objets présentant naturellement des reflets et des scintillements de lumière doivent être représentés par des images avec un maximum de réalisme.

De telles conditions se trouvent par exemple dans des situations techniques pour des analyses de phénomènes, dans des situations didactiques pour présenter des objets dans des configurations réalistes et aussi proche visuellement que possible à une population d'étudiants, dans des situations industrielles pour visualiser au stade d'un projet les effets de reflets et de scintillements qui seront obtenus par une forme particulière d'un objet et pour comparer différentes options, dans des situations commerciales pour présenter à un public acheteur un rendu aussi réaliste que possible d'objet non disponibles pour être présenté physiquement.

L'invention peut également être mise en oeuvre pour attirer l'attention d'un observateur sur des endroits précis d'une image par l'intégration de reflets dans l'image sous la forme de points brillants, par exemple dans des situations de tension et demandant une concentration élevée pour attirer significativement l'attention d'un opérateur sans dégrader le contenu informatif de l'image qu'il a sous les yeux.

## Revendications

1. Dispositif d'affichage (100) d'images (59) comportant un terminal de visualisation (20) dont un écran (21) est raccordé fonctionnellement à un système de diffusion d'images numériques (24) pour afficher une première image (50) sur ledit écran, **caractérisé en ce qu'**il comporte :
- un projecteur (23) raccordé fonctionnellement au système de diffusion d'images numériques (24) pour projeter une seconde image (52) sur une surface réfléchissante suivant un mode de réflexion principalement spéculaire, la surface réfléchissante présentant un ou des motifs géométriques en relief de sorte que des rayons lumineux incidents soient réfléchis dans des directions variables en fonction d'emplacements de points de réflexion sur ladite surface réfléchissante des dits rayons incidents ; ladite seconde image étant superposable à la première image et ne représentant, sur un fond uni, que les zones de l'objet présenté dans la première image, devant comporter des reflets ou scintillements;
- des moyens de superposition optique de tout ou partie de l'écran (21) consistants dans le support (22) transparent de la surface réfléchissante placé devant l'écran (21) ou dans une lame semi-réfléchissante (25) inclinée placée entre l'écran et le support de la surface réfléchissante (22) de sorte que pour un observateur utilisant le dispositif d'affichage, une seconde image (52) projetée sur la surface réfléchissante se superpose à une première image (50) affichée sur l'écran (21) pour former l'image (59) observée.

2. Dispositif d'affichage suivant la revendication 1 dans lequel le système de diffusion d'images (24) est configuré pour transmettre au projecteur (23) une ou des secondes images (52) synchronisées avec une première image (50) transmise à l'écran (21).

3. Dispositif d'affichage suivant l'une des revendications précédentes dans lequel une seconde image (52) est une image de reflets et ou de scintillements d'une première image (50) avec laquelle ladite seconde image est associée dans le système de diffusion d'images numériques (24).

4. Dispositif d'affichage suivant la revendication 3 dans lequel le système de diffusion d'images numériques (24) comporte des moyens de génération d'une image en trois dimensions d'un objet dont une première image (50) est transmise à l'écran (21) et comporte des moyens de génération quasi simultanée d'au moins une seconde image (52) représentative des reflets sur l'objet représenté par ladite première image.

5. Dispositif d'affichage suivant l'une des revendications précédentes comportant des moyens pour réaliser des micro-déplacements de la seconde image (52) projetée autour d'une position théorique de ladite seconde image, micro-déplacements d'une amplitude au plus d'un même ordre de grandeur que des dimensions des motifs géométriques en relief de la surface réfléchissante.

6. Dispositif d'affichage suivant l'une des revendications précédentes dans lequel le projecteur (23) est un projecteur vidéo adapté à la projection des secondes images (52) ou un projecteur à balayage à faisceaux laser.

7. Dispositif d'affichage suivant l'une des revendications précédentes dans lequel un support (22) de la surface réfléchissante est fixé sur ou très près de la face d'affichage de l'écran (21), avec une face arrière dudit support de la surface réfléchissante située du côté de l'écran (21) et une face avant dudit support de la surface réfléchissante située du côté du projecteur (23), ledit support de la surface réfléchissante apparaissant essentiellement transparent pour des rayons lumineux arrivant sur la face arrière et essentiellement réfléchissant pour des rayons lumineux arrivant sur la face avant.

8. Dispositif d'affichage suivant la revendication 7 dans lequel la surface réfléchissante présente des motifs géométriques en relief dont des dimensions caractéristiques sont telles que la première image (50) observée par transparence à travers le support de la surface réfléchissante n'est pas déformée de manière sensiblement perceptible pour un observateur situé à une distance d'observation prévue, par exemple de l'ordre de deux fois une diagonale de l'écran (21).

9. Dispositif d'affichage suivant l'une des revendications 1 à 6 comportant une lame semi-transparente (25) inclinée de 45° située sur un chemin optique entre une fenêtre d'observation (26) et l'écran (21) et agencée pour renvoyer vers la fenêtre d'observation des rayons lumineux réfléchis par la surface réfléchissante de sorte qu'une seconde image (52) projetée sur la surface réfléchissante se superpose optiquement à une première image (50) affichée sur l'écran (21).

10. Dispositif d'affichage suivant l'une des revendications précédentes dans lequel le ou les motifs géométriques en relief de la surface réfléchissante sont aléatoires ou pseudo aléatoires sur au moins une partie de ladite surface réfléchissante.

11. Dispositif d'affichage suivant l'une des revendications précédentes dans lequel le ou les motifs géométriques en relief de la surface réfléchissante sont structurés pour former un motif régulier répétitif sur au moins une partie de ladite surface réfléchissante.

12. Dispositif d'affichage suivant l'une des revendications précédentes dans lequel le ou les motifs géométriques en relief de la surface réfléchissante sont corrélés à tout ou partie de formes d'un objet représenté par la première image (51).

13. Dispositif d'affichage suivant l'une des revendications précédentes dans lequel le relief des motifs géométriques du côté de la face réfléchissante du support (22) de la surface réfléchissante sont le résultat de d'un gaufrage d'un film présentant une surface réfléchissante, d'un formage d'un support d'une surface réfléchissante, d'un moulage ou d'un usinage d'un support d'une surface réfléchissante, d'une dispersion aléatoire de paillettes réfléchissantes à la surface d'un support, d'une dispersion aléatoire de paillettes réfléchissantes dans un matériau transparent d'un support.

14. Procédé de simulation visuelle de reflets et scintillements d'un objet présenté sous la forme d'une première image (50) dudit objet affichée sur un écran (21) **caractérisé en ce qu'**il comporte les étapes de :
- génération d'une seconde image (52) superposable à la première image (50), ladite seconde image ne représentant, sur un fond uni, que les zones de l'objet devant comporter des reflets et ou scintillements, puis ;
- de projection de la seconde image (52) sur une surface réfléchissante suivant un mode de réflexion principalement spéculaire, la surface réfléchissante présentant un ou des motifs géométriques en relief de sorte que les rayons lumineux incidents soient réfléchis dans des directions variables en fonctions d'emplacements de points de réflexion sur ladite surface réfléchissante des dits rayons incidents;
- de placement du support (22) transparent de la surface réfléchissante devant l'écran (21) ou de placement d'une lame semi-réfléchissante (25) inclinée entre l'écran et le support de la surface réfléchissante;
- de superposition optique de la seconde image (52) projetée sur la surface réfléchissante sur la première image (50) affichée sur l'écran (21) pour former une image (59) observable de l'objet incorporant des effets de reflets et ou de scintillements.

15. Procédé suivant la revendication 14 dans lequel la première image (50) est issue d'une photographie de l'objet présenté et dans lequel la seconde image (52) est réalisée par un traitement numérique de ladite photographie de l'objet de laquelle sont identifiées des surfaces et zones de reflets et de scintillements et ou par synthèse d'images.

16. Procédé suivant la revendication 14 dans lequel la première image (50) est une image de synthèse de l'objet présenté et dans lequel la seconde image (52) est une image de synthèse des zones de l'objet devant comporter des reflets et ou scintillements.

17. Procédé suivant l'une des revendications 14 à 16 dans lequel la première image (50) est une image animée et dans lequel la seconde image (52) projetée est animée pour être en correspondance à chaque instant avec la première image affichée.

## Patentansprüche

1. Vorrichtung zum Anzeigen (100) von Bildern (59), umfassend ein Visualisierungsgerät (20), von dem ein Bildschirm (21) funktionell an ein System zur Verbreitung von digitalen Bildern (24) angeschlossen ist, um ein erstes Bild (50) auf dem Bildschirm anzuzeigen, **dadurch gekennzeichnet, dass** sie umfasst:
- einen Projektor (23), der funktionell an das System zur Verbreitung von digitalen Bildern (24) angeschlossen ist, um ein zweites Bild (52) auf eine im Wesentlichem gemäß einem Spiegelreflexionsmodus reflektierende Oberfläche zu projizieren, wobei die reflektierende Oberfläche ein oder mehrere erhabene geometrische Muster zeigt, sodass einfallende Lichtstrahlen abhängig von Reflexionspunktstellen auf der die einfallenden Strahlen reflektierenden Oberfläche in unterschiedliche Richtungen reflektiert werden; wobei das zweite Bild dem ersten Bild überlagerbar ist und auf einem einheitlichen Grund nur die Bereiche des im ersten Bild gezeigten Objekts darstellt, die Reflexe oder Funkeln umfassen sollen;
- Mittel zur optischen Überlagerung des gesamten oder eines Teils des Bildschirms (21), die im transparenten Träger (22) der reflektierenden Oberfläche, welcher vor dem Bildschirm (21) platziert ist, oder in einer geneigten halbreflektierenden Scheibe (25) bestehen, welche zwischen dem Bildschirm und dem Träger der reflektierenden Oberfläche (22) platziert ist, sodass sich für einen Betrachter, der die Anzeigevorrichtung verwendet, ein auf die reflektierende Oberfläche projiziertes zweites Bild (52) einem auf dem Bildschirm (21) angezeigten ersten Bild (50) überlagert, um das betrachtete Bild (59) zu bilden.

2. Anzeigevorrichtung nach Anspruch 1, wobei das System zur Verbreitung von Bildern (24) dafür konfiguriert ist, ein oder mehrere zweite Bilder (52) an den Projektor (23) zu übertragen, die mit einem ersten Bild (50), das an den Bildschirm (21) übertragen wird, synchronisiert sind.

3. Anzeigevorrichtung nach einem der vorstehenden Ansprüche, wobei ein zweites Bild (52) ein Bild von Reflexen und/oder von Funkeln eines ersten Bildes (50) ist, dem das zweite Bild im System zur Verbreitung von digitalen Bildern (24) zugeordnet ist.

4. Anzeigevorrichtung nach Anspruch 3, wobei das System zur Verbreitung von digitalen Bildern (24) Mittel zum Erzeugen eines dreidimensionalen Bildes eines Objekts umfasst, von dem ein erstes Bild (50) an den Bildschirm (21) übertragen wird, und Mittel zum quasi gleichzeitigen Erzeugen von mindestens einem zweiten Bild (52) umfasst, welches für die Reflexe auf einem vom ersten Bild dargestellten Objekt repräsentativ ist.

5. Anzeigevorrichtung nach einem der vorstehenden Ansprüche, die Mittel zum Ausführen von Mikroverschiebungen des projizierten zweiten Bildes (52) um eine theoretische Position des zweiten Bildes herum umfasst, Mikroverschiebungen einer Amplitude von höchstens ein und derselben Größenordnung wie Abmessungen der erhabenen geometrischen Muster der reflektierenden Oberfläche.

6. Anzeigevorrichtung nach einem der vorstehenden Ansprüche, wobei der Projektor (23) ein Videoprojektor, der zum Projizieren der zweiten Bilder (52) geeignet ist, oder ein Projektor mit Laserstrahlabtastung ist.

7. Anzeigevorrichtung nach einem der vorstehenden Ansprüche, wobei ein Träger (22) der reflektierenden Oberfläche mit einer Rückfläche des Trägers der reflektierenden Oberfläche auf der Seite des Bildschirms (21) befindlich, und einer Vorderfläche des Trägers der reflektierenden Oberfläche auf der Seite des Projektors (23) befindlich auf oder sehr nahe an der Anzeigefläche des Bildschirms (21) befestigt ist, wobei der Träger der reflektierenden Oberfläche für Lichtstrahlen, die auf die Rückfläche treffen, im Wesentlichen transparent, und für Lichtstrahlen, die auf die Vorderfläche treffen, im Wesentlichen reflektierend erscheint.

8. Anzeigevorrichtung nach Anspruch 7, wobei die reflektierende Oberfläche erhabene geometrische Muster zeigt, von denen charakteristische Abmessungen derart sind, dass das erste Bild (50), das durch Transparenz durch den Träger der reflektierenden Oberfläche hindurch betrachtet wird, für einen Betrachter, der sich in einem vorgesehenen Betrachtungsabstand befindet, zum Beispiel in der Größenordnung des Zweifachen einer Diagonale des Bildschirms (21), nicht in wesentlich wahrnehmbarer Weise verformt ist.

9. Anzeigevorrichtung nach einem der Ansprüche 1 bis 6, die eine um 45° geneigte halbtransparente Scheibe (25) umfasst, welche sich in einem optischen Pfad zwischen einem Betrachtungsfenster (26) und dem Bildschirm (21) befindet und dafür eingerichtet ist, Lichtstrahlen, die von der reflektierenden Oberfläche reflektiert werden, zum Betrachtungsfenster hin zurückzulenken, sodass ein zweites Bild (52), das auf die reflektierende Oberfläche projiziert wird, sich optisch einem ersten Bild (50), das auf dem Bildschirm (21) angezeigt wird, überlagert.

10. Anzeigevorrichtung nach einem der vorstehenden Ansprüche, wobei das oder die erhabenen geometrischen Muster der reflektierenden Oberfläche auf mindestens einem Teil der reflektierenden Oberfläche zufällig oder pseudozufällig sind.

11. Anzeigevorrichtung nach einem der vorstehenden Ansprüche, wobei das oder die erhabenen geometrischen Muster der reflektierenden Oberfläche strukturiert sind, um auf mindestens einem Teil der reflektierenden Oberfläche ein sich regelmäßig wiederholendes Muster zu bilden.

12. Anzeigevorrichtung nach einem der vorstehenden Ansprüche, wobei das oder die erhabenen geometrischen Muster der reflektierenden Oberfläche mit allen oder einem Teil der Formen eines vom ersten Bild (51) dargestellten Objekts korreliert sind.

13. Anzeigevorrichtung nach einem der vorstehenden Ansprüche, wobei die Erhabenheit der geometrischen Muster auf der Seite der reflektierenden Fläche des Trägers (22) der reflektierenden Oberfläche das Ergebnis sind eines Prägens eines Films, der eine reflektierende Oberfläche zeigt, eines Bildens eines Trägers einer reflektierenden Oberfläche, eines Formens oder eines Zerspanens eines Trägers einer reflektierenden Oberfläche, einer zufälligen Verteilung von reflektierenden Pailletten an der Oberfläche eines Trägers, einer zufälligen Verteilung von reflektierenden Pailletten in einem transparenten Material eines Trägers.

14. Verfahren zur visuellen Simulation von Reflexen und Funkeln eines Objekts, das in der Form eines ersten Bildes (50) des Objekts gezeigt wird, welches auf einem Bildschirm (21) angezeigt wird, **dadurch gekennzeichnet, dass** es die Schritte umfasst des:
- Erzeugens eines zweiten Bildes (52), das dem ersten Bild (50) überlagerbar ist, wobei das zweite Bild auf einem einheitlichen Grund nur die Bereiche des Objekts darstellt, die Reflexe und/oder Funkeln umfassen sollen; und anschließend
- des Projizierens des zweiten Bildes (52) auf eine im Wesentlichem gemäß einem Spiegelreflexionsmodus reflektierende Oberfläche, wobei die reflektierende Oberfläche ein oder mehrere erhabene geometrische Muster zeigt, sodass die einfallenden Lichtstrahlen abhängig von Reflexionspunktstellen auf der die einfallenden Strahlen reflektierenden Oberfläche in unterschiedliche Richtungen reflektiert werden;
- des Platzierens des transparenten Trägers (22) der reflektierenden Oberfläche vor dem Bildschirm (21), oder des Platzierens einer geneigten halbreflektierenden Scheibe (25) zwischen dem Bildschirm und dem Träger der reflektierenden Oberfläche;
- des optischen Überlagerns des auf die reflektierende Oberfläche projizierten zweiten Bildes (52) dem auf dem Bildschirm (21) angezeigten ersten Bild (50), um ein betrachtbares Bild (59) des Objekts zu bilden, das Reflex- und/oder Funkeleffekte beinhaltet.

15. Verfahren nach Anspruch 14, wobei das erste Bild (50) von einer Photographie des gezeigten Objekts stammt, und wobei das zweite Bild (52) durch eine digitale Bearbeitung der Photographie des Objekts, aus der Oberflächen und Bereiche von Reflexen und von Funkeln identifiziert werden, und/oder durch Synthese von Bildern ausgeführt wird.

16. Verfahren nach Anspruch 14, wobei das erste Bild (50) ein Synthesebild des gezeigten Objekts ist, und wobei das zweite Bild (52) ein Synthesebild der Bereiche des Objekts ist, die Reflexe und/oder Funkeln umfassen sollen.

17. Verfahren nach einem der Ansprüche 14 bis 16, wobei das erste Bild (50) ein animiertes Bild ist, und wobei das projizierte zweite Bild (52) so animiert wird, dass es sich zu jedem Zeitpunkt mit dem angezeigten ersten Bild in Entsprechung befindet.

## Claims

1. Device for displaying (100) images (59) comprising a viewing terminal (20) a screen (21) of which is functionally connected to a system for disseminating digital images (24) in order to display a first image (50) on said screen, **characterised in that** it comprises:
- a projector (23) functionally connected to the system for disseminating digital images (24) in order to project a second image (52) onto a reflective surface according to a mainly specular mode of reflection, with the reflective surface having one or several three-dimensional geometric features so that incident light rays are reflected in variable directions according to the locations of reflection points on said reflective surface of said incident rays; said second image being superimposed on the first image and representing, on a solid background, only the zones of the object presented in the first image, that is to comprise reflections or scintillations;
- means for optically superposing all or a portion of the screen (21) consisting in the transparent medium (22) of the reflective surface placed in front of the screen (21) or in an inclined semi-reflective sheet (25) placed between the screen and the medium of the reflective surface (22) so that for an observer using the displaying device, a second image (52) projected onto the reflective surface is superposed on a first image (50) displayed on the screen (21) in order to form the observed image (59).

2. Displaying device according to claim 1 wherein the system for disseminating digital images (24) is configured to transmit to the projector (23) one or several second images (52) synchronised with a first image (50) transmitted to the screen (21).

3. Displaying device according to one of the preceding claims wherein a second image (52) is an image of reflections and/or of scintillations of a first image (50) with which said second image is associated in the system for disseminating digital images (24).

4. Displaying device according to claim 3 wherein the system for disseminating digital images (24) comprises means for generating a three-dimensional image of an object of which a first image (50) is transmitted to the screen (21) and comprises means for quasi-simultaneously generating at least one second image (52) representative of the reflections on the object represented by said first image.

5. Displaying device according to one of the preceding claims comprising means for producing micro-displacements of the second image (52) projected around a theoretical position of said second image, micro-displacements of an amplitude of at least the same magnitude as the dimensions of the three-dimensional geometric features of the reflective surface.

6. Displaying device according to one of the preceding claims wherein the projector (23) is a video projector suitable for the projection of the second images (52) or a laser beam scanning projector.

7. Displaying device according to one of the preceding claims wherein a medium (22) of the reflective surface is fastened onto or very close to the display face of the screen (21), with a rear face of said medium of the reflective surface located on the side of the screen (21) and a front face of said medium of the reflective surface located on the side of the projector (23), said medium of the reflective surface substantially appearing transparent for light rays arriving on the rear face and substantially reflective for light rays arriving on the front face.

8. Displaying device according to claim 7 wherein the reflective surface has three-dimensional geometric features of which characteristic dimensions as such that the first image (50) observed by transparency through the medium of the reflective surface is not deformed in a manner that is substantially perceptible for an observer located at a provided observation distance, for example of about twice the diagonal of the screen (21).

9. Displaying device according to one of claims 1 to 6 comprising a semi-transparent sheet (25) inclined 45° located on an optical path between an observation window (26) and the screen (21) and arranged to return to the observation window light rays reflected by the reflective surface in such a way that a second image (52) projected on the reflective surface is superposed on a first image (50) displayed on the screen (21).

10. Displaying device according to one of the preceding claims wherein the three-dimensional geometric feature or features of the reflective surface are random or pseudorandom over at least one portion of said reflective surface.

11. Displaying device according to one of the preceding claims wherein the three-dimensional geometric feature or features of the reflective surface are structured to form a repetitive regular feature over at least one portion of said reflective surface.

12. Displaying device according to one of the preceding claims wherein the three-dimensional geometric feature or features of the reflective surface are correlated with all or a portion of forms of an object represented by the first image (51).

13. Displaying device according to one of the preceding claims wherein the three-dimensional geometric features on the side of the reflective face of the medium (22) of the reflective surface are the result of an embossing of a film having a reflective surface, a forming of a medium of a reflective surface, of a moulding or of a machining of a medium of a reflective surface, of a random dispersion of reflective glitter on the surface of a medium, of a random dispersion of reflective glitter in a transparent material of a medium.

14. Method for visually simulating reflections and scintillations of an object presented in the form of a first image (50) of said object displayed on a screen (21) **characterised in that** it comprises the steps of:
- generating a second image (52) that can be superposed on the first image (50), said second image representing, on a solid background, only the zones of the object that are to comprise reflections and/or scintillations, then;
- projecting the second image (52) onto a reflective surface according to a mainly specular mode of reflection, with the reflective surface having one or several three-dimensional geometric features so that the incident light rays are reflected in variable directions according to the positions of points of reflection on said reflective surface of said incident rays;
- placing the transparent medium (22) of the reflective surface in front of the screen (21) or placing a semi-reflective sheet (25) inclined between the screen and the medium of the reflective surface;
- optically superposing the second image (52) projected onto the reflective surface on the first image (50) displayed on the screen (21) in order to form an observable image (59) of the object incorporating reflection and/or scintillation effects.

15. Method according to claim 14 wherein the first image (50) comes from a photograph of the object presented and wherein the second image (52) is produced by a digital processing of said photograph of the object of which are identified surfaces and zones of reflections and of scintillations and/or by image synthesis.

16. Method according to claim 14 wherein the first image (50) is a synthesis image of the. object presented and wherein the second image (52) is a synthesis image of the zones of the object that is to comprise reflections and/or scintillations.

17. Method according to one of claims 14 to 16 wherein the first image (50) is an animated image and wherein the second image (52) projected is animated in order to be in correspondence at each instant with the first image displayed.
